# EUROPÄISCHE PATENTSCHRIFT

(11) **EP 1 496 385 B1**
(45) Veröffentlichungstag und Bekanntmachung des Hinweises auf die Patenterteilung: **13.05.2009**
(21) Anmeldenummer: 04015828.9
(22) Anmeldetag: 06.07.2004
(51) Int. Cl.: G02B 21/06, G02B 21/00

(54) **Anordnung im Beleuchtungsstrahlengang eines Laser-Scanning-Mikroskopes**
Arrangement in illumination beam path of laser scanning microscope
Agencement dans le chemin des rayons d'éclairage d'un microscope de balayage à laser

(30) Priorität: 11.07.2003 DE 10332062
(43) Veröffentlichungstag der Anmeldung: 12.01.2005
(73) Patentinhaber: Carl Zeiss MicroImaging GmbH, 07745 Jena (DE)
(72) Erfinder: Lange, Ralph, 07743 Jena (DE); Wilhelm, Stefan, 07743 Jena (DE); Meisel, Ulrich, 07743 Jena (DE); Reich, Matthias, 07743 Jena (DE)
(74) Vertreter: Hampe, Holger

(56) Entgegenhaltungen:
- WO-A-02/15808
- DE-A- 4 323 129
- DE-A- 19 702 753
- US-A- 5 581 345
- US-A- 5 915 823
- US-A- 5 999 255
- US-A- 6 160 662
- US-B1- 6 388 807
- US-B1- 6 437 913
- US-B1- 6 447 503

## Beschreibung

Anregungswellenlängen werden angeboten, die durch eine geeignete mechanische Integration entsprechender Standard-Laserstrahlquellen in einem Lasermodul realisiert werden. Neben diesen Standard-Lasern entsteht beim Kunden aber oftmals der Wunsch, andere Wellenlängen oder leistungsstärkere Laserstrahlquellen für spezielle Anregungsprozesse im LSM nutzen zu können. Eine mechanische Integration in den vorhandenen Aufbau würde jedoch umfangreiche Sonderanfertigungen erfordern, die mit hohen Kosten und langen Lieferzeiten verbunden sind. Daher besteht Bedarf an einer kostengünstigen Anordnung, die eine Einkopplung von Laserstrahlung, deren Leistung und Wellenlänge innerhalb eines weiten Bereiches beliebig gewählt werden kann, in den Anregungsstrahlengang eines LSM s erlaubt.

### Stand der Technik:

DE19702753 beschreibt die Einkopplung mehrerer Laser über ein Lasermodul in das LSM über einen AOTF.

DE19829981A1 beschreibt die Beaufschlagung unterschiedlicher Probenorte mit unterschiedlichen Wellenlängen durch die Verbindung von Stellsignalen für die Scannersteuerung und den AOTF. DE19834279A1 beschreibt einen einem AOM nachgeordneten Kippspiegel zur Strahlumleitung.

Aus dem "Handbook of Biological Confocal Microscopy", 02.03.1995, Seite 151 (E.H.K. Stelzer)ist es bekannt, mehrere Laser über eine Lichtleitfaser in das Laser-Scanning-Mikroskop einzukoppeln.

Die erfinderische Lösung ist Gegenstand des unabhängigen Anspruchs 1. Vorteilhafte Weiterbildungen sowie ein zugeordnetes Verfahren sind Gegenstand der abhängigen Ansprüche.

Die räumliche Überlagerung der User-Port-Strahlung mit dem optischen Strahlengang der Standard-Laser im Lasermodul erfolgt durch ein optisches Umschaltelement. Dieses Umschaltelement besitzt idealerweise ein hohes Reflexionsvermögen über einen großen Spektralbereich. Bevorzugt wird der Umschaltvorgang mechanisch ausgeführt.

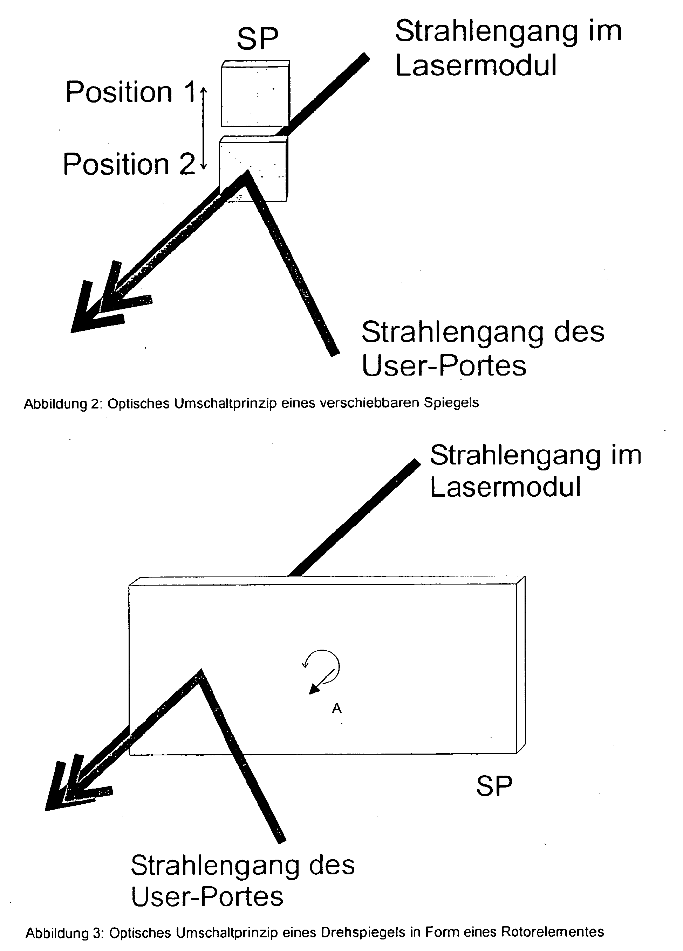

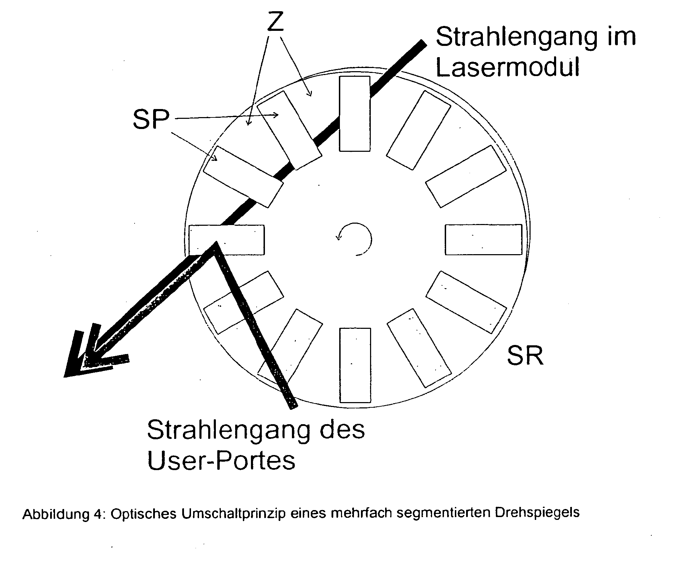

Ein mechanischer Umschaltvorgang zwischen den beiden optischen Kanälen kann prinzipiell durch Verschieben eines Spiegelelementes zwischen zwei festen Positionen oder durch eine Drehbewegung erfolgen. In jedem Fall ist es vorteilhaft, dass das Reflektorelement räumlich eng begrenzten Übergangsbereiche zwischen reflektierenden und transmittierenden Bereichen von typisch kleiner als 1 mm besitzt, um kurze Schaltzeiten zu gewährleisten (Abbildung 2). Bei einer Drehbewegung muss das Spiegelelement so ausgeführt sein, dass reflektierende und transparente Bereiche abwechselnd den Strahlengang durchlaufen. Im einfachsten Fall kann das optische Element aus einem einzigen Segment bestehen, das in seiner Form und Funktion einem Rotor entspricht (Abbildung 3). Aber auch optische Elemente mit mehreren Spiegelsegmenten sind möglich, um die Schaltfrequenzen zwischen User-Port und Standardlasern zu erhöhen (Abbildung 4). In jedem Fall wird die Drehposition ständig erfasst, um eine Synchronisation mit der übrigen Mikroskop-Steuerung zu ermöglichen.

Die mechanische Stabilität wird durch eine fixierte (durch den Kunden nicht lösbare) Faseranbindung erzielt. Die Schnittstelle zum Kunden stellt der Fasereingang dar, in den die Strahlung eines Lasers mit in weiten Bereichen beliebigen Emissionswellenlängen und Leistungen durch den Kunden eingekoppelt werden kann. Die Einkopplung der Laserstrahlung erfolgt vorzugsweise durch einen kompakten mechanischen Manipulator, der mechanisch mit der Laserstrahlquelle durch den Kunden verbunden wird.

Um die Effizienz der Strahleinkopplung kontrollieren und optimieren zu können, ist vorteilhafter weise im User-Port eine Möglichkeit zur Überwachung der am Faserende austretenden Leistung vorzusehen. Dies kann beispielsweise eine Photodiode sein, auf die über ein optisches Element ein geringer Teil der Laserstrahlung gelenkt wird. Das resultierende elektrische Signal wird dem Kunden durch geeignete Schnittstellen, beispielsweise eine optische Anzeige oder als elektrisches Ausgangssignal, zur Verfügung gestellt.

Die Erfindung wird nachstehend anhand der schematischen Zeichnungen näher erläutert. Weiterhin wird bezüglich der Beschreibung eines Laser-Scanning-Mikroskopes auf DE19702753A1 Bezug genommen.

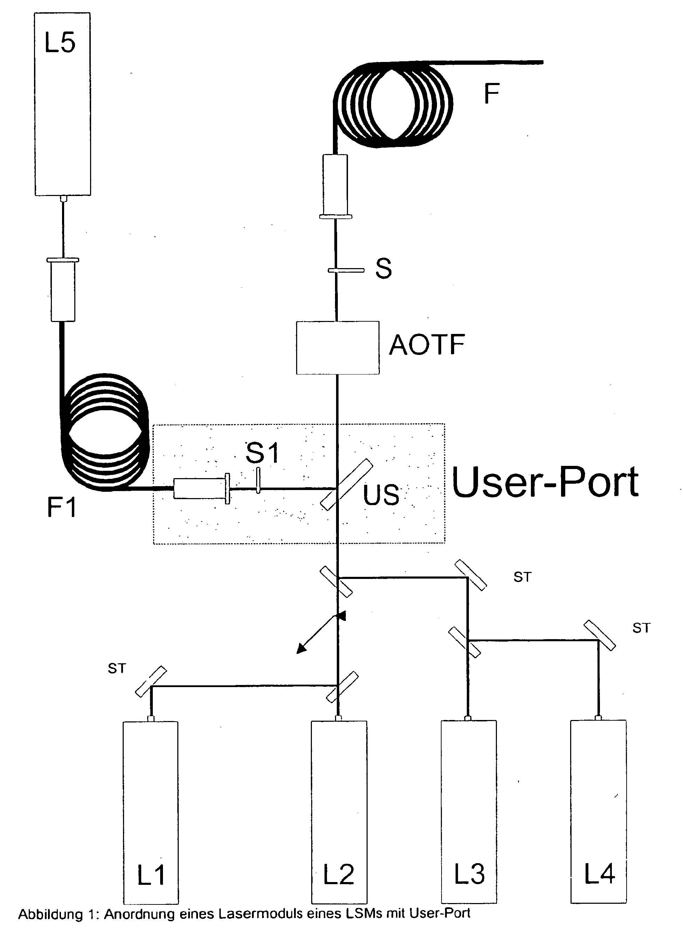

In Fig.1 erfolgt die Einkopplung von Lasern L1-L4 über Strahlvereiniger ST und einen AOTF und einen Verschluss S in eine Lichtleitfaser F.

Über ein Umschaltelement US erfolgt die wahlweise Einspiegelung eines weiteren Lasers L5, vorzugsweise über eine weitere Lichtleitfaser F1 und Verschluss S1. Dieses Umschaltelement US ist in Fig. 2 und 3 in unterschiedlichen Ausführungen dargestellt.

In Fig.2 wird als Alternativbeispiel, das nicht erfindungsgemäß ist, ein Spiegel SP in den Strahlengang eingeschwenkt (Position 2) bzw. herausgeschwenkt. Das führt dazu, dass das Licht des Lasers L5 nur dann in den Strahlengang eingespiegelt wird, wenn dieser tatsächlich benötigt wird.

Dies kann auch sehr schnell erfolgen, wie in Fig.3 und 4 beispielhaft dargestellt.

In Fig.3 wird ein rechteckiges Spiegelelement SP schnell um eine Drehachse A gedreht und gelangt hierdurch periodisch in den Strahlengang des Einkoppelteils. In Fig.4 befinden sich Spiegelelemente SP 1 auf einem Spiegelrad SR, wobei sich zwischen den Spiegeln SP1 Zwischenräume Z befinden, die lichtdurchlässig sind. Vorteilhaft sind die Spiegel SP auf einer Glasscheibe befestigt bzw. aufgedampft. Durch Synchronisieren der erfassten Drehposition des Rades SR bzw. der Drehung des Spiegels SP in Fig. 3 mit der Mikroskopsteuerung kann vorteilhaft durch entsprechende Schaltung des AOTF abwechselnd die Strahlung des Lasers 5 über die Spiegel SP1 bzw. eines oder mehrerer der Laser L1-L4 in den Zwischenräumen Z auf die Probe gelangen.

Durch Drehgeschwindigkeiten von typischerweise bis zu 10000 u/min und Schaltgeschwindigkeiten des AOTF im µs Bereich kann hierdurch ein Wechsel der Wellenlänge zwischen zwei aufeinander folgenden Zeilenscans erfolgen, was für die Bestrahlung sogenannter "ROI" - Bereiche auf der Probe von besonderer Bedeutung ist ( DE 19829981A1).

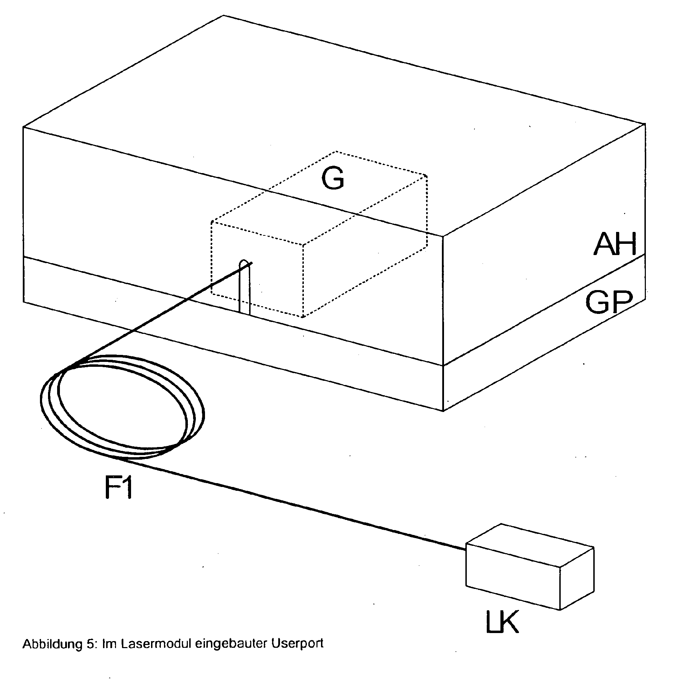

Vorteilhaft kann das Einkoppelmodul wie in Fig.5 dargestellt, in einem festen Gehäuse G angeordnet werden, das auf der Grundplatte GP des Lasermoduls montiert wird. Eine Abdeckhaube AH überdeckt das Lasermodul inklusive Userport. Die Justage der Überdeckung vom Userport-Strahlengang mit dem des Lasermoduls erfolgt einmalig beim Einsetzen des Userportes. Die Laserstrahlung wird über eine flexible Lichtleitfaser F1, die vorzugsweise als polarisationserhaltende single-mode-Faser ausgeführt ist, über eine Aussparung in der Abdeckhaube AH in das Gehäuse der Userportes G geführt. Der Laserstrahlkoppler LK wird von dem Anwender mit dem gewünschten Laser L5 verbunden und der Laserstrahl mit geeigneten mechanischen Justagevorrichtungen in die Faser eingekoppelt.

## Patentansprüche

1. Laser - Scanning -Mikroskop mit einem Beleuchtungsstrahlengang,
der ein Lasermodul zur Einkopplung von Laserlicht mehrerer Laser (L1-L4) in das Mikroskop enthält,
wobei zur Einkopplung der Beleuchtung, dem Lasermodul nachgeordnet , ein AOTF im Beleuchtungsstrahlengang angeordnet ist,
**dadurch gekennzeichnet dass**
mindestens ein zusätzlicher Laser (L5) zur Beleuchtung vorgesehen ist und im Lasermodul
ein umschaltbares Reflektorelement angeordnet ist, dessen Schaltvorgang mittels der Mikroskopsteuerung mit dem Schaltvorgang des AOTF synchronisiert ist und
das zur periodischen Einkopplung drehbar als Spiegelrad ausgebildet ist, um das Licht des zusätzlichen Lasers einzuspiegeln oder den Strahlengang freizugeben,

2. Laser - Scanning -Mikroskop nach Anspruch 1,
wobei eine Lichtleitfaser (F) zur Einkopplung des Beleuchtungslichtes in das Mikroskop vorgesehen ist.

3. Laser - Scanning -Mikroskop nach Anspruch 1, wobei sich auf dem Spiegelrad zwischen angeordneten Spiegeln mindestens ein lichtdurchlässiger Bereich (Z) befindet.

4. Laser - Scanning -Mikroskop nach Anspruch 1 ,2 oder 3, wobei ein länglich ausgebildeter Spiegel um eine Drehachse rotierbar ist.

5. Laser - Scanning -Mikroskop nach einem der Ansprüche 1-4, wobei das Spiegelrad Teil eines Einschubs (G) in den Beleuchtungsmodul ist.

6. Laser - Scanning -Mikroskop nach einem der Ansprüche 1-5, wobei der zusätzliche Laser über eine Lichtleitfaser (F1)eingekoppelt wird.

7. Verfahren zum Betrieb eines Laser Scanning- Mikroskops mit einem Spiegelrad nach einem Ansprüche 1-6, wobei der Schwenkvorgang über eine Ansteuereinheit so mit der Beleuchtungssteuerung synchronisiert ist, dass bei ein geschwenktem Spiegel mindestens ein zusätzlicher Laser in den Beleuchtungsstrahlengang eingekoppelt wird und eine Einkopplung der Beleuchtung in das Mikroskop über mindestens einen AOTF erfolgt, dessen Betrieb mittels der Mikroskopsteuerung mit dem Schaltvorgang synchronisiert ist.

## Claims

1. Laser scanning microscope having an illumination beam path which contains a laser module for coupling laser light of several lasers (L1-L4) into the microscope, wherein in order to couple-in the illumination, an AOTF is disposed in the illumination beam path, downstream of the laser module, **characterised in that** at least one additional laser (L5) is provided for illumination purposes, and a switchable reflector element is disposed in the laser module, the switching procedure of the reflector element being synchronised with the switching procedure of the AOTF by means of the microscope control, and the reflector element being formed for periodic coupling-in purposes in a rotatable manner as a mirror wheel in order to reflect in the light of the additional laser or to release the beam path.

2. Laser scanning microscope as claimed in claim 1, wherein a light-conducting fibre (F) is provided for the purpose of coupling the illumination light into the microscope.

3. Laser scanning microscope as claimed in claim 1, wherein at least one light-transmitting region (Z) is located on the mirror wheel between arranged mirrors.

4. Laser scanning microscope as claimed in claim 1, 2 or 3, wherein an elongate mirror can be rotated about an axis of rotation.

5. Laser scanning microscope as claimed in any one of claims 1-4, wherein the mirror wheel is part of a plug-in (G) into the illumination module.

6. Laser scanning microscope as claimed in any one of claims 1-5, wherein the additional laser is coupled-in via a light-conducting fibre (F1).

7. Method of operating a laser scanning microscope having a mirror wheel as claimed in any one of claims 1-6, wherein the swivelling procedure is synchronised with the illumination control via a control unit such that when the mirror is swivelled in at least one additional laser is coupled into the illumination beam path and the illumination is coupled into the microscope via at least one AOTF, the operation of which is synchronised with the switching procedure by means of the microscope control.

## Revendications

1. Microscope de balayage à laser avec un chemin des rayons d'éclairage, qui contient un module laser pour le couplage de la lumière laser de plusieurs lasers (L1-L4) dans le microscope, où pour le couplage de l'éclairage, en aval du module laser, un AOTF est disposé dans le chemin des rayons d'éclairage,
**caractérisé en ce qu'**il est prévu au moins un laser additionnel (L5) pour l'éclairage, et dans le module laser est disposé un élément réflecteur commutable dont l'opération de commutation est synchronisée au moyen de la commande du microscope avec l'opération de commutation du AOTF et qui, pour le couplage périodique, est réalisé d'une manière tournante comme roue réflectrice pour réfléchir la lumière du laser additionnel ou pour libérer le chemin des rayons.

2. Microscope de balayage à laser selon la revendication 1, où est prévue une fibre de guidage de lumière (F) pour le couplage de la lumière d'éclairage dans le microscope.

3. Microscope de balayage à laser selon la revendication 1, où se trouve sur la roue réflectrice entre des miroirs disposés au moins une zone Z perméable à la lumière.

4. Microscope de balayage à laser selon la revendication 1, 2 ou 3, où un miroir oblong peut tourner autour d'un axe de rotation.

5. Microscope de balayage à laser selon l'une des revendications 1 à 4, où la roue réflectrice fait partie d'un organe d'insertion (G) dans le module d'éclairage.

6. Microscope de balayage à laser selon l'une des revendications 1 à 5, où le laser additionnel est couplé par une fibre de guidage de lumière (F1).

7. Procédé de fonctionnement d'un microscope de balayage à laser avec une roue réflectrice selon l'une des revendications 1 à 6, où l'opération de pivotement est synchronisée par une unité de commande de telle sorte avec la commande d'éclairage que lorsque le miroir est pivoté vers l'intérieur, au moins un laser additionnel est couplé dans le chemin des rayons d'éclairage et un couplage de l'éclairage dans le microscope a lieu par au moins un AOTF dont le fonctionnement est synchronisé au moyen de la commande du microscope avec l'opération de commutation.
